# EUROPEAN PATENT APPLICATION

(11) **EP 4 769 560 A1**
(43) Date of publication of application: **01.07.2026**
(21) Application number: 24856606.9
(22) Date of filing: 11.06.2024
(51) Int. Cl.: H01M 4/505, C01G 45/12, H01M 4/525, H01M 10/052, H01M 4/02

(54) **CATHODE ACTIVE MATERIAL FOR LITHIUM SECONDARY BATTERY, MANUFACTURING METHOD THEREFOR, AND LITHIUM SECONDARY BATTERY COMPRISING SAME**

(30) Priority: 21.08.2023 KR 20230109029
(71) Applicant: POSCO Holdings Inc., Pohang-si, Gyeongsangbuk-do 37859 (KR); Research Institute of Industrial Science & Technology, Pohang-si, Gyeongsangbuk-do 37673 (KR)
(72) Inventor: SONG, Jun-Hyuk, Seoul 06516 (KR); YU, Byongyong, Incheon 22003 (KR); NAM, Sang Cheol, Seoul 02587 (KR)
(74) Representative: Pfenning, Meinig & Partner mbB
(86) International application number: PCT/KR2024/007924
(87) International publication number: WO 2025/041990

(57) **Abstract**

The present invention relates to a positive electrode active material for a lithium secondary battery, which is a layered lithium transition metal oxide containing an excess of lithium and manganese, wherein the positive electrode active material is a secondary particle formed by aggregation of a plurality of primary particles, and the primary particles include plate-shaped particles and have an average aspect ratio of 5 to 90.

## Description

### [Technical Field]

The present invention relates to a positive electrode active material for a lithium secondary battery, a method for manufacturing the same, and a lithium secondary battery comprising the same, and more specifically, to a lithium- and manganese-excess positive electrode active material for a lithium secondary battery, a method for manufacturing the same, and a lithium secondary battery comprising the same.

### [Background Art]

As the range of applications for lithium secondary batteries expands from small electronic devices to electric vehicles, power storage systems, and the like, there is an increasing demand for positive electrode materials having excellent high energy density and high output characteristics.

In this regard, lithium- and manganese-excess layered lithium transition metal oxides are spotlighted as candidates for next-generation positive electrode active materials because they have a very high capacity of 240 mAh/g or more, and research thereon has been actively conducted recently.

However, lithium- and manganese-excess lithium transition metal oxides inherently have a low true density of the active material itself compared to conventional positive electrode materials due to high lithium content and a relatively low transition metal ratio in the structure, and the packing of particles is not dense because crystal growth directions vary depending on the composition of the material. More specifically, lithium- and manganese-excess lithium transition metal oxides have low tap density and electrode density even after secondary particle formation due to plate-shaped crystal growth caused by a high manganese content. For this reason, even if the capacity characteristics of the positive electrode material itself are excellent, there has been a limit to increasing the energy density of an electrode when applied to an actual battery.

Further, since lithium- and manganese-excess lithium transition metal oxides use an oxygen oxidation-reduction reaction in addition to the transition metal, oxygen on the surface or in the bulk is likely to be generated as oxygen gas. Due to this, a dense spinel/rock salt structure with no or low reactivity may be easily formed in the particles, which may adversely affect high output characteristics compared to conventional positive electrode materials. In addition, the reactivity of the surface in the oxygen oxidation-reduction range is very sensitive to the overall capacity expression, so if the particles are made too dense and the tap density becomes excessively high, a problem may occur in output characteristics.

### [Detailed Description of the Invention]

### [Technical Problem]

Accordingly, one object of the present invention is to provide a positive electrode active material for a lithium secondary battery, which is a lithium- and manganese-excess lithium transition metal oxide capable of improving both battery energy density and output characteristics, a method for manufacturing the same, and a lithium secondary battery comprising the same.

### [Technical Solution]

One embodiment of the present invention provides a positive electrode active material for a lithium secondary battery, which is a layered lithium transition metal oxide containing an excess of lithium and manganese, is a secondary particle formed by aggregation of a plurality of primary particles, wherein the primary particles include plate-shaped particles, and has an average aspect ratio of 5 to 90.

In the lithium transition metal oxide, a molar ratio of lithium to transition metal (Li/Me) may be greater than 1, and a molar ratio of manganese to transition metal (Mn/Me) may be 0.55 or more.

In the lithium transition metal oxide, the molar ratio of lithium to transition metal (Li/Me) may be 1.985 or less.

In the lithium transition metal oxide, a molar ratio of nickel to transition metal (Ni/Me) may be 0.2 to 0.4.

The positive electrode active material for a lithium secondary battery may have a tap density of 1.5 to 2.3 g/cc.

The positive electrode active material for a lithium secondary battery may have a BET specific surface area of 0.5 to 4 m²/g.

The average thickness of the primary particles may be 500 nm or less.

The average particle diameter (D₅₀) of the secondary particles may be 3 to 15 µm.

The lithium transition metal oxide may be represented by Chemical Formula 1 below.

[Chemical Formula 1] Li₁₊ₐ(MnₓM_{y})₁₋ₐO₂

In Chemical Formula 1, 0 < a ≤ 0.33, 0.55 ≤ x < 1, 0 < y ≤ 0.45, x + y = 1, and M is Ni, Co, V, Cr, Fe, Ru, Ir, or a combination thereof.

Another embodiment of the present invention provides a method for manufacturing a positive electrode active material for a lithium secondary battery, the method comprising: preparing a transition metal hydroxide containing manganese in a molar ratio of manganese to transition metal (Mn/Me) of 0.55 or more; and forming a lithium transition metal oxide by forming a mixture comprising the transition metal hydroxide and a lithium raw material such that a molar ratio of lithium to transition metal (Li/Me) is 1.3 or more, and then performing calcination, wherein the lithium transition metal oxide is a secondary particle formed by aggregation of a plurality of primary particles, the primary particles include plate-shaped particles, and an average aspect ratio of the primary particles is 10 to 90.

The step of preparing the transition metal hydroxide includes: forming a transition metal-containing solution including a manganese raw material and other transition metal raw materials; introducing the transition metal-containing solution, a complexing agent-containing solution, and a pH adjuster-containing solution into a reactor to form an initial reaction solution; and performing a co-precipitation reaction of the initial reaction solution to form the transition metal hydroxide, wherein in the step of forming the initial reaction solution, a concentration of the complexing agent in the complexing agent-containing solution may be 0.4 to 1.6 mol%.

In the step of forming the initial reaction solution, a pH of the initial reaction solution may be 9.6 to 11.

In the step of forming the lithium transition metal oxide, the calcination may be performed at a temperature of 700 to 1000 °C.

Another embodiment of the present invention provides a lithium secondary battery comprising: a positive electrode; a negative electrode; a separator; and an electrolyte, wherein the positive electrode includes the positive electrode active material described above.

### [Advantageous Effects]

A positive electrode active material for a lithium secondary battery according to an embodiment of the present invention contains an excess of lithium and manganese, and as the aspect ratio of primary particles is adjusted, both battery energy density and output characteristics can be satisfactorily improved.

### [Brief Description of Drawings]

FIG. 1 is an SEM image of a positive electrode active material manufactured according to Example 1.
FIG. 2 is an SEM image of a positive electrode active material manufactured according to Example 2.
FIG. 3 is an SEM image of a positive electrode active material manufactured according to Comparative Example 1.
FIG. 4 is an SEM image of a positive electrode active material manufactured according to Comparative Example 2.
FIG. 5 is an SEM image of a positive electrode active material manufactured according to Comparative Example 3.

### [DETAILED DESCRIPTION OF THE EMBODIMENTS]

Terms such as first, second, and third are used to describe various parts, components, regions, layers, and/or sections, but are not limited thereto. These terms are only used to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is for the purpose of referring to specific embodiments only and is not intended to limit the present invention. As used herein, the singular forms include the plural forms as well, unless the context clearly indicates otherwise. The meaning of "comprising" used in the specification specifies a specific characteristic, region, integer, step, operation, element, and/or component, and does not exclude the presence or addition of other characteristics, regions, integers, steps, operations, elements, and/or components.

When a part is referred to as being "on" or "above" another part, it may be directly on or above the other part, or other parts may be involved therebetween. In contrast, when a part is referred to as being "directly on" another part, no other part is interposed therebetween.

Unless otherwise defined, all terms including technical and scientific terms used herein have the same meaning as commonly understood by one of ordinary skill in the art to which the present invention belongs. Terms defined in commonly used dictionaries are further interpreted as having meanings consistent with the related technical literature and the presently disclosed content, and are not interpreted in an ideal or very formal sense unless defined.

In addition, unless otherwise specified, % means wt%, and 1 ppm is 0.0001 wt%.

In the present specification, the term "combination(s) thereof" described in the Markush-type expression means one or more mixtures or combinations selected from the group consisting of the components described in the Markush-type expression, and means including any one or more selected from the group consisting of the components.

Hereinafter, embodiments of the present invention will be described in detail so that those of ordinary skill in the art to which the present invention belongs can easily practice the same. However, the present invention may be implemented in various different forms and is not limited to the embodiments described herein.

### 1. Positive Electrode Active Material

An embodiment of the present invention provides a positive electrode active material for a lithium secondary battery, which is a layered lithium transition metal oxide containing an excess of lithium and manganese, is a secondary particle formed by aggregation of a plurality of primary particles, wherein the primary particles include plate-shaped particles, and has an average aspect ratio of 5 to 90.

The positive electrode active material for a lithium secondary battery according to an embodiment of the present invention is a layered lithium transition metal oxide containing an excess of lithium and manganese. Specifically, in the lithium transition metal oxide, a molar ratio of lithium to transition metal (Li/Me) may be greater than 1, and a molar ratio of manganese to transition metal (Mn/Me) may be 0.55 or more.

As the lithium transition metal oxide contains an excess of lithium and manganese, the initial discharge capacity is 240 mAh/g or more, and the capacity characteristics can be significantly improved compared to a positive electrode material of a conventional NCM composition.

More specifically, in the lithium transition metal oxide, the molar ratio of lithium to transition metal (Li/Me) is greater than 1, more specifically 1.1, 1.2, or 1.3 or more, and may be 1.985 or less or 1.6 or less. As the molar ratio of lithium to transition metal increases, capacity characteristics are improved, but if it is too large, a phase stability problem occurs due to the use of oxygen oxidation/reduction, which may cause a problem that cycle life characteristics are significantly degraded.

However, in a lithium transition metal oxide containing an excess of lithium and manganese, the shape of the primary particles generally grows in a plate-like form due to a high manganese content. Due to this shape, there is a problem that the tap density is low even when secondary particles are formed, and as a result, the electrode density is lowered. When the electrode density is low, the energy density of the electrode is lowered even if the capacity characteristics of the positive electrode material itself are excellent.

In addition, since the lithium transition metal oxide containing an excess of lithium and manganese uses an oxygen oxidation-reduction reaction in addition to the transition metal, oxygen on the surface or in the bulk is likely to be generated as oxygen gas. Due to this, a spinel/rock salt structure may be easily formed in the particles, which causes a problem that high output characteristics are deteriorated compared to a positive electrode material of a conventional NCM composition. In addition, when the tap density is increased by making the particles dense to increase the energy density of the electrode, the output characteristics may be deteriorated due to the reaction of the surface in the oxygen oxidation-reduction range.

That is, when applying a lithium- and manganese-excess lithium transition metal oxide as a positive electrode material, the energy density characteristics of the electrode and the battery output characteristics are in a trade-off relationship with each other.

The present inventors have completed the present invention by finding that it is important to appropriately control the average aspect ratio of the primary particles in order to appropriately improve both the electrode energy density and the battery output characteristics.

The positive electrode active material for a lithium secondary battery according to an embodiment of the present invention is a secondary particle formed by aggregation of a plurality of primary particles, wherein the primary particles include plate-shaped particles.

In particular, the average aspect ratio of the primary particles is 5 to 90, and more specifically, may be 10 to 80. If the average aspect ratio of the primary particles is too large, the tap density of the active material and the electrode density are too low, and as a result, the battery energy density may be lowered. If the average aspect ratio of the primary particles is too small, the tap density and the battery energy density may be satisfactory, but the output characteristics of the battery may be deteriorated due to the reaction of the surface in the oxygen oxidation-reduction range.

In the present specification, the "average aspect ratio of the primary particles" may be a ratio of length to thickness (length/thickness) of the plate-shaped primary particles, where the length is a diameter of a plane formed by the plate-shaped primary particles, and when a longest length and a shortest length of the plane formed by the primary particles are different from each other, it may mean the longest length.

Further, the average aspect ratio may be measured by quantifying an SEM image through a segmentation imaging technique.

In addition, the average thickness of the primary particles may be 500 nm or less, and more specifically, may be 160 to 500 nm, or 180 to 450 nm. If the average thickness of the primary particles is too large, output characteristics may decrease. If the average thickness of the primary particles is too small, battery energy density may decrease. In the present specification, the average thickness of the primary particles can be measured through the same image analysis technique as described above.

The positive electrode active material for a lithium secondary battery may have a tap density of 1.5 to 2.3 g/cc, and more specifically, 1.5 to 2.2 g/cc. As the tap density of the active material satisfies the above range, both the energy density of the electrode and the battery output characteristics can be well implemented. More specifically, if the tap density of the active material is too low, the battery energy density may be low, and if the tap density of the active material is too high, the battery output characteristics may be deteriorated.

In the present specification, tap density is a method for measuring the degree of packing of a sample per unit volume and can be measured by a method generally used in the art. For example, it may be a density (sample weight/volume) calculated through a change in volume after mechanically tapping a measurement container containing a sample from a certain height a set number of times in accordance with the measurement equipment and method specified in ASTM B527.

The positive electrode active material for a lithium secondary battery may have a BET specific surface area of 0.5 to 4 m²/g, and more specifically, 2 to 4 m²/g or 2.5 to 4 m²/g. If the specific surface area of the positive electrode active material is too small, there may be a capacity reduction problem due to a decrease in the activity of the oxygen oxidation/reduction reaction, and if the specific surface area of the positive electrode active material is too large, there may be a problem of deterioration in output and cycle characteristics due to the formation of a surface spinel structure caused by an increase in side reactions with an electrolyte at high voltage.

In the present specification, the specific surface area of the active material can be measured for the active material powder using a BET method (Surface area and Porosity analyzer) (Micromeritics, ASAP2020).

Meanwhile, in the lithium transition metal oxide, a molar ratio of nickel to transition metal (Ni/Me) may be 0.2 to 0.4. When the molar ratio of nickel to the transition metal satisfies the above range, the aforementioned battery performance improvement effect can be more preferably implemented.

In addition, the average particle diameter (D₅₀) of the secondary particles may be 3 to 15 µm.

In the present specification, the average particle diameter (D₅₀) can be defined as a particle diameter corresponding to 50% of the volume accumulation in a particle size distribution curve of the particles. The average particle diameter (D₅₀) can be measured using, for example, a laser diffraction method. The laser diffraction method generally enables measurement of a particle size from a submicron range to several mm, and results with high repeatability and high resolution can be obtained.

More specifically, the lithium transition metal oxide may be represented by Chemical Formula 1 below.

[Chemical Formula 1] Li₁₊ₐ(MnₓM_{y})₁₋ₐO₂

In Chemical Formula 1, 0 < a ≤ 0.33, 0.55 ≤ x < 1, 0 < y ≤ 0.45, x + y = 1, and M is Ti, Nb, Mo, Sn, Ta, W, Ni, Co, V, Cr, Fe, Ru, Ir, Zr, Al, B, Y, or a combination thereof.

In the lithium transition metal oxide of Chemical Formula 1, lithium may be included in a content corresponding to 1+a. At this time, a satisfies the range of 0 < a ≤ 0.33. If a is too small, capacity characteristics may be deteriorated, and if a is too large, a phase stability problem occurs due to the use of oxygen oxidation/reduction, which may cause a problem that cycle life characteristics are significantly degraded.

In the lithium transition metal oxide of Chemical Formula 1, manganese may be included in a content corresponding to x, that is, 0.55 ≤ x < 1. When the content of manganese is sufficiently large in this way, capacity characteristics can be improved.

In the lithium transition metal oxide of Chemical Formula 1, other transition metals may be included in a content corresponding to y, that is, 0 < y ≤ 0.45. At this time, the transition metal may be Ti, Nb, Mo, Sn, Ta, W, Ni, Co, V, Cr, Fe, Ru, Ir, Zr, Al, B, Y, or a combination thereof.

### 2. Method for Manufacturing Positive Electrode Active Material

Another embodiment of the present invention provides a method for manufacturing a positive electrode active material for a lithium secondary battery, the method comprising: preparing a transition metal hydroxide containing manganese such that a molar ratio of manganese to transition metal (Mn/Me) is 0.55 or more; and forming a lithium transition metal oxide by forming a mixture comprising the transition metal hydroxide and a lithium raw material such that a molar ratio of lithium to transition metal (Li/Me) is 1.3 or more, and then performing calcination, wherein the lithium transition metal oxide is a secondary particle formed by aggregation of a plurality of primary particles, the primary particles include plate-shaped particles, and an average aspect ratio of the primary particles is 10 to 90.

Hereinafter, a method for manufacturing a positive electrode active material according to another embodiment of the present invention will be described in detail for each step.

First, a transition metal hydroxide containing manganese in a molar ratio of manganese to transition metal (Mn/Me) of 0.55 or more is prepared.

The step of preparing the transition metal hydroxide more specifically includes: forming a transition metal-containing solution including a manganese raw material and other transition metal raw materials; introducing the transition metal-containing solution, a complexing agent-containing solution, and a pH adjuster-containing solution into a reactor to form an initial reaction solution; and performing a co-precipitation reaction of the initial reaction solution to form the transition metal hydroxide.

In particular, since the aspect ratio of the primary particles can be obtained differently through the input amount and concentration of the complexing agent-containing solution and the pH adjuster-containing solution, and pH control of the initial reaction solution, the aspect ratio of the primary particles in the lithium transition metal oxide can be easily obtained within the range according to the present invention through appropriate adjustment thereof.

More specifically, in the step of forming the initial reaction solution, a concentration of the complexing agent in the complexing agent-containing solution may be 0.4 to 1.6 mol%. In addition, in the step of forming the initial reaction solution, a pH of the initial reaction solution may be 9.6 to 11. Through control of the co-precipitation process conditions, the aspect ratio of the primary particles in the lithium transition metal oxide can be appropriately obtained within the range according to the present invention.

The manganese raw material is not particularly limited as long as it is used in the manufacture of a positive electrode active material precursor in the art. For example, the manganese raw material may be manganese-containing sulfate, acetate, nitrate, halide, sulfide, hydroxide, oxide, oxyhydroxide, or a combination thereof. Specifically, it may be manganese salts such as MnSO₄, MnCO₃, Mn(NO₃)₂, manganese acetate, manganese dicarboxylate, manganese citrate, and manganese fatty acid salts; manganese oxides such as Mn₂O₃, MnO₂, and Mn₃O₄; oxyhydroxide; manganese chloride; or a combination thereof, but is not limited thereto.

The other transition metal raw materials may include, for example, a nickel raw material or a cobalt raw material, but are not limited thereto.

The nickel raw material is not particularly limited as long as it is used in the manufacture of a positive electrode active material precursor in the art. For example, the nickel raw material may be nickel-containing sulfate, acetate, nitrate, halide, sulfide, hydroxide, oxide, oxyhydroxide, and the like. Specifically, it may be NiSO₄, NiSO₄·6H₂O, Ni(OH)₂, NiO, NiOOH, NiCO₃·2Ni(OH)₂·4H₂O, NiC₂O₂·2H₂O, Ni(NO₃)₂·6H₂O, nickel fatty acid salts, nickel halides, or a combination thereof, but is not limited thereto.

The cobalt raw material is not particularly limited as long as it is used in the manufacture of a positive electrode active material precursor in the art. For example, the cobalt raw material may be cobalt-containing sulfate, acetate, nitrate, halide, sulfide, hydroxide, oxide, oxyhydroxide, and the like. Specifically, it may be CoSO₄, CoSO₄·7H₂O, Co(OH)₂, CoOOH, Co(OCOCH₃)₂·4H₂O, Co(NO₃)₂·6H₂O, or a combination thereof, but is not limited thereto.

The transition metal-containing solution may be prepared by adding the manganese raw material and other transition metal raw materials to a solvent, specifically water, or a mixture of water and an organic solvent (e.g., alcohol, etc.) that can be uniformly mixed with water.

The complexing agent-containing solution serves to form a complex and may include, for example, NH₃, NH₄OH, (NH₄)₂SO₄, NH₄NO₃, NH₄Cl, CH₃COONH₄, NH₄CO₃, or a combination thereof as a complexing agent, but is not limited thereto. Meanwhile, the complexing agent-containing solution may be used in the form of an aqueous solution, and in this case, water or a mixture of water and an organic solvent (e.g., alcohol, etc.) uniformly miscible with water may be used as the solvent.

The pH adjuster-containing solution serves as a precipitant or for pH adjustment, and may include an alkali compound such as a hydroxide of an alkali metal or alkaline earth metal such as NaOH, KOH, or Ca(OH)₂, a hydrate thereof, or a combination thereof. Meanwhile, the pH adjuster-containing solution may also be used in the form of an aqueous solution, and in this case, water or a mixture of water and an organic solvent (e.g., alcohol, etc.) uniformly miscible with water may be used as the solvent. At this time, the pH adjuster-containing solution may be added in an amount such that the pH of the reaction solution is 11 to 13.

The co-precipitation reaction may be performed under an inert atmosphere such as nitrogen or argon, and may be performed at a temperature of 30 to 70 °C and at a pH of 11 to 13.

Through the above process, particles of manganese-other transition metal element hydroxide are generated and precipitated in the reaction solution. The precipitated precursor particles are separated according to a conventional method, washed with water, and dried to obtain a precursor. The precursor may be a secondary particle formed by aggregation of primary particles.

At this time, by controlling the concentration of the manganese raw material and other transition metal raw materials, the molar ratio of manganese and other transition metals in the precursor can be adjusted.

Next, a mixture comprising the transition metal hydroxide and a lithium raw material is formed such that a molar ratio of lithium to transition metal (Li/Me) is 1.3 or more, and then calcination is performed to form a lithium transition metal oxide.

By adjusting the molar ratio of lithium to transition metal (Li/Me) to be 1.3 or more, the content of lithium in the lithium transition metal oxide, which is the final product, can be appropriately controlled within the range according to the present invention described above.

The lithium raw material may be lithium-containing sulfate, nitrate, acetate, carbonate, oxalate, citrate, halide, hydroxide, oxyhydroxide, and the like, and is not particularly limited as long as it can be dissolved in water. Specifically, the lithium raw material may be Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, Li₃C₆H₅O₇, or a combination thereof, but is not limited thereto.

At this time, the calcination may be performed at a temperature of 700 to 1000 °C, and more specifically, 800 to 900 °C. If the calcination temperature is too low, unreacted precursors and residual lithium remain, which may cause a problem in slurry stability during electrode manufacturing, and if the calcination temperature is too high, there may be a problem that particles grow too coarsely.

The calcination may be performed under an oxygen or air atmosphere. When calcined under the above atmosphere, the local oxygen partial pressure increases, so that the crystallinity of the positive electrode active material can be improved.

Accordingly, a lithium- and manganese-excess lithium transition metal oxide, which is a secondary particle formed by aggregation of a plurality of primary particles, wherein the primary particles include plate-shaped particles and have an average aspect ratio of 5 to 90, can be formed.

### 3. Lithium Secondary Battery

Another embodiment of the present invention provides a lithium secondary battery comprising: a positive electrode; a negative electrode; a separator; and an electrolyte, wherein the positive electrode comprises the aforementioned positive electrode active material. The lithium secondary battery may optionally further include a battery container housing an electrode assembly of the positive electrode, the negative electrode, and the separator, and a sealing member for sealing the battery container.

Specifically, the positive electrode may include a positive electrode current collector and a positive electrode active material layer disposed on the positive electrode current collector and comprising the aforementioned positive electrode active material. The positive electrode current collector is not particularly limited as long as it possesses conductivity without causing chemical changes in the battery, and for example, stainless steel, aluminum, nickel, titanium, calcined carbon, or aluminum or stainless steel surface-treated with carbon, nickel, titanium, silver, or the like may be used. Additionally, the positive electrode current collector typically may have a thickness of 3 to 500 µm, and fine irregularities may be formed on the surface of the positive electrode current collector to enhance the adhesion of the positive electrode active material. For example, it may be used in various forms such as films, sheets, foils, nets, porous bodies, foams, non-woven fabrics, and the like.

The positive electrode active material layer may include a binder and/or a conductive material along with the aforementioned positive electrode active material.

In this case, the binder serves to improve adhesion between the positive electrode active material particles and the adhesion between the positive electrode active material and the positive electrode current collector. Specific examples include, but are not limited to, polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene-butadiene rubber (SBR), fluororubber, or various copolymers thereof, and mixtures of one or more of these may be used. The binder may be included in an amount of 1 to 30 wt% based on the total weight of the positive electrode active material layer.

The conductive material is used to impart conductivity to the electrode and can be used without particular limitation as long as it possesses electronic conductivity without causing chemical changes in the battery. Specific examples include, but are not limited to, graphite such as natural graphite or artificial graphite; carbon-based materials such as carbon black, acetylene black, ketjen black, channel black, furnace black, lamp black, thermal black, and carbon fibers; metal powders or metal fibers such as copper, nickel, aluminum, and silver; conductive whiskers such as zinc oxide and potassium titanate; conductive metal oxides such as titanium oxide; or conductive polymers such as polyphenylene derivatives, and mixtures of one or more of these may be used. The conductive material may typically be included in an amount of 1 to 30 wt% based on the total weight of the positive electrode active material layer.

The positive electrode can be manufactured according to a conventional positive electrode manufacturing method, except for using the aforementioned positive electrode active material.

Specifically, the positive electrode can be manufactured by applying a composition for forming a positive electrode active material layer, which includes the aforementioned positive electrode active material and optionally a binder, a conductive material, or a solvent, onto the positive electrode current collector, followed by drying and rolling. In this case, the types and contents of the positive electrode active material, binder, and conductive material are as described above.

The solvent may be one commonly used in the art, and examples thereof include dimethyl sulfoxide (DMSO), isopropyl alcohol, N-methylpyrrolidone (NMP), acetone, or water, and mixtures of one or more of these may be used. The amount of the solvent used should be sufficient to dissolve or disperse the positive electrode active material, the conductive material, and the binder, considering the coating thickness of the slurry and the manufacturing yield, and to have a viscosity that can exhibit excellent thickness uniformity during the coating process for manufacturing an electrode.

Alternatively, as another method, the positive electrode may be manufactured by casting the composition for forming the positive electrode active material layer onto a separate support and then laminating a film obtained by peeling it off from the support onto the positive electrode current collector.

The negative electrode may include a negative electrode current collector and a negative electrode active material layer positioned on the negative electrode current collector.

The negative electrode current collector is not particularly limited as long as it possesses high conductivity without causing chemical changes in the battery, and for example, copper, stainless steel, aluminum, nickel, titanium, calcined carbon, or copper or stainless steel surface-treated with carbon, nickel, titanium, silver, or the like, and aluminum-cadmium alloys may be used. Additionally, the negative electrode current collector typically may have a thickness of 3 to 500 µm, and similar to the positive electrode current collector, fine irregularities may be formed on the surface of the current collector to enhance the binding force of the negative electrode active material. For example, it may be used in various forms such as films, sheets, foils, nets, porous bodies, foams, non-woven fabrics, and the like.

The negative electrode active material layer may optionally include a binder and a conductive material along with the negative electrode active material. The negative electrode active material layer may be manufactured, for example, by applying a composition for forming a negative electrode active material layer comprising the negative electrode active material and optionally a binder and a conductive material onto the negative electrode current collector followed by drying, or by casting the composition for forming the negative electrode onto a separate support and then laminating a film obtained by peeling it off from the support onto the negative electrode current collector.

Compounds capable of reversible intercalation and deintercalation of lithium may be used as the negative electrode active material. Specific examples include carbonaceous materials such as artificial graphite, natural graphite, graphitized carbon fiber, and amorphous carbon; metallic compounds capable of alloying with lithium such as Si, Al, Sn, Pb, Zn, Bi, In, Mg, Ga, Cd, Si alloys, Sn alloys, or Al alloys; metal oxides capable of doping and undoping lithium such as SiO_{β} (0 < β < 2), SnO₂, vanadium oxide, and lithium vanadium oxide; or composites comprising the metallic compounds and the carbonaceous materials such as a Si-C composite or a Sn-C composite, and any one or a mixture of two or more of these may be used. Additionally, a lithium metal thin film may be used as the negative electrode active material. Furthermore, as the carbon material, both low-crystalline carbon and high-crystalline carbon may be used. Representative examples of low-crystalline carbon include soft carbon and hard carbon, and representative examples of high-crystalline carbon include amorphous, plate-shaped, flaky, spherical, or fibrous natural graphite or artificial graphite, Kish graphite, pyrolytic carbon, mesophase pitch-based carbon fiber, mesocarbon microbeads, Mesophase pitches, and high-temperature calcined carbon such as petroleum or coal tar pitch derived cokes.

The binder and the conductive material may be the same as those described above for the positive electrode.

The separator separates the negative electrode and the positive electrode and provides a pathway for lithium ions, and anything typically used as a separator in lithium secondary batteries can be used without particular limitation. Especially, it is preferable to have low resistance to ion movement of the electrolyte and excellent electrolyte wettability. Specifically, a porous polymer film, for example, a porous polymer film made of polyolefin-based polymers such as ethylene homopolymer, propylene homopolymer, ethylene/butene copolymer, ethylene/hexene copolymer, and ethylene/methacrylate copolymer, or a multilayer structure of two or more layers thereof may be used. Additionally, conventional porous non-woven fabrics, for example, non-woven fabrics made of high-melting point glass fibers, polyethylene terephthalate fibers, and the like may also be used. Furthermore, a coated separator containing a ceramic component or a polymer material may be used to ensure heat resistance or mechanical strength, and it may optionally be used in a single-layer or multi-layer structure.

The electrolyte may include, but is not limited to, organic liquid electrolytes, inorganic liquid electrolytes, solid polymer electrolytes, gel-type polymer electrolytes, solid inorganic electrolytes, and molten-type inorganic electrolytes that can be used in the manufacture of lithium secondary batteries.

Specifically, the organic liquid electrolyte may include an organic solvent and a lithium salt.

The organic solvent can be used without particular limitation as long as it can serve as a medium through which ions involved in the electrochemical reaction of the battery can move. Specifically, the organic solvent may include ester-based solvents such as methyl acetate, ethyl acetate, γ-butyrolactone, and ε-caprolactone; ether-based solvents such as dibutyl ether or tetrahydrofuran ; ketone-based solvents such as cyclohexanone; aromatic hydrocarbon-based solvents such as benzene and fluorobenzene; carbonate-based solvents such as dimethyl carbonate (DMC), diethyl carbonate (DEC), methylethyl carbonate (MEC), ethylmethyl carbonate (EMC), ethylene carbonate (EC), and propylene carbonate (PC) ; alcohol-based solvents such as ethyl alcohol and isopropyl alcohol; nitriles such as R-CN (where R is a C₂ to C₂₀ linear, branched, or cyclic hydrocarbon group, and may include a double-bonded aromatic ring or an ether linkage); amides such as dimethylformamide; dioxolanes such as 1,3-dioxolane; or sulfolanes, and the like. Among these, carbonate-based solvents are preferred, and a mixture of cyclic carbonates (e.g., ethylene carbonate or propylene carbonate, etc.) having high ionic conductivity and high dielectric constant that can enhance the charge/discharge performance of the battery and low-viscosity linear carbonate-based compounds (e.g., ethylmethyl carbonate, dimethyl carbonate, or diethyl carbonate, etc.) is more preferred. In this case, mixing the cyclic carbonate and the chain carbonate in a volume ratio of about 1:1 to about 1:9 may result in excellent performance of the electrolyte.

The lithium salt can be used without particular limitation as long as it is a compound capable of providing lithium ions used in lithium secondary batteries. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ and the like may be used as the lithium salt. The concentration of the lithium salt is preferably within the range of 0.1 to 2.0 M. When the concentration of the lithium salt is within the above range, the electrolyte may exhibit excellent performance with appropriate conductivity and viscosity, and lithium ions can effectively move.

In addition to the electrolyte components, the electrolyte may further include one or more additives for the purpose of, for example, improving the life characteristics of the battery, suppressing battery capacity reduction, and enhancing the discharge capacity of the battery, such as haloalkylene carbonate-based compounds like difluoroethylene carbonate, pyridine, triethylphosphite, triethanolamine, cyclic ethers, ethylenediamine, n-glyme, hexamethylphosphoric triamide, nitrobenzene derivatives, sulfur, quinone imine dyes, N-substituted oxazolidinones, N,N-substituted imidazolidines, ethylene glycol dialkyl ethers, ammonium salts, pyrrole, 2-methoxyethanol, or aluminum trichloride. In this case, the additive may be included in an amount of 0.1 to 5 wt% based on the total weight of the electrolyte.

As described above, since the lithium secondary battery including the positive electrode active material according to the present invention stably exhibits excellent discharge capacity, output characteristics, and capacity retention rate, it is useful in the field of portable devices such as mobile phones, laptop computers, and digital cameras, and electric vehicles such as hybrid electric vehicles (HEV).

Accordingly, another embodiment of the present invention provides a battery module including the lithium secondary battery as a unit cell and a battery pack including the same. The battery module or the battery pack may be used as a power source for one or more medium-to-large devices including power tools; electric vehicles including electric vehicles (EV), hybrid electric vehicles, and plug-in hybrid electric vehicles (PHEV); or power storage systems.

Hereinafter, embodiments of the present invention will be described in more detail through examples. However, the following examples are merely preferred embodiments of the present invention and are not intended to limit the present invention to these examples.

### Example 1: Average Aspect Ratio of Primary Particles of 50

### (1) Manufacture of Positive Electrode Active Material

### (Manufacture of Transition Metal Hydroxide)

An initial reaction solution was formed by introducing a transition metal-containing solution, a 1.5 mol% NH₄OH solution, and a NaOH solution into a co-precipitation reactor and adjusting the pH to 10. A co-precipitation reaction was performed to manufacture a transition metal hydroxide having a composition in which a molar ratio of Ni/Mn was 35/65.

### (Manufacture of Lithium Transition Metal Oxide)

Thereafter, LiOH·H₂O was mixed such that a molar ratio of lithium to transition metal (Li/Me) of the transition metal hydroxide was 1.33, and then calcination was performed at a temperature of 850 °C for 10 hours to manufacture a lithium transition metal oxide represented by a compositional formula of Li_{1.13}Ni_{0.3}Mn_{0.37}O₂.

### (2) Manufacture of Lithium Secondary Battery

A slurry for manufacturing an electrode plate was mixed in a weight ratio of the manufactured positive electrode active material : conductive material (carbon black, denka black) : binder (PVDF, KF1100) = 92.5 : 3.5 : 4 wt%, and NMP (N-Methyl-2-pyrrolidone) was added to adjust the viscosity such that a solid content was about 30%. The manufactured slurry was coated onto an Al foil having a thickness of 15 µm using a doctor blade, followed by drying and rolling. The electrode loading amount was 14.6 mg/cm², and the rolling density (at 25 °C, 20 kN) was 3.1 g/cm³.

As an electrolyte, 1 M LiPF₆ in EC:DMC:EMC = 3:4:3 (vol%), to which 3.0 vol% of VC was added based on the total amount of the electrolyte, was used. A coin cell was manufactured using a PP separator and a lithium negative electrode (200 µm, Honzo metal).

### Example 2

A positive electrode active material and a lithium secondary battery of the same compositional formula were manufactured in the same manner as in Example 1, except that the concentration of the NH₄OH solution was 0.5 mol% and the pH of the initial reaction solution was 10.8.

### Example 3

A positive electrode active material and a lithium secondary battery of the same compositional formula were manufactured in the same manner as in Example 1, except that the concentration of the NH₄OH solution was 1.5 mol% and the pH of the initial reaction solution was 9.8.

### Comparative Example 1

A positive electrode active material and a lithium secondary battery of the same compositional formula were manufactured in the same manner as in Example 1, except that the concentration of the NH₄OH solution was 0.3 mol% and the pH of the initial reaction solution was 11.3.

### Comparative Example 2

A positive electrode active material and a lithium secondary battery of the same compositional formula were manufactured in the same manner as in Example 1, except that the concentration of the NH₄OH solution was 1.7 mol% and the pH of the initial reaction solution was 9.8.

### Comparative Example 3

A positive electrode active material and a lithium secondary battery of the same compositional formula were manufactured in the same manner as in Example 1, except that the concentration of the NH₄OH solution was 2.0 mol% and the pH of the initial reaction solution was 9.8.

### Experimental Example 1: SEM Images of Positive Electrode Active Material

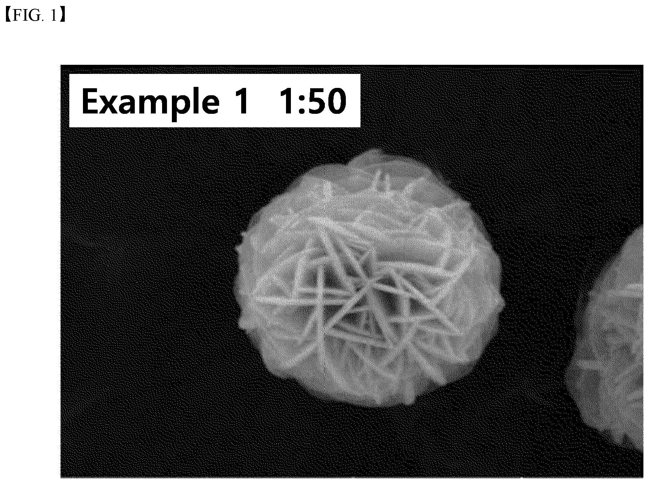

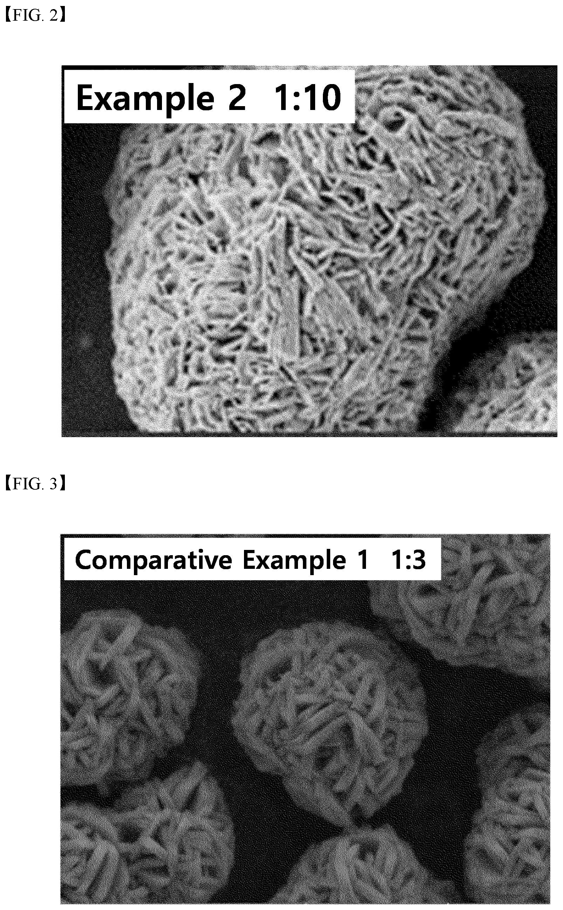

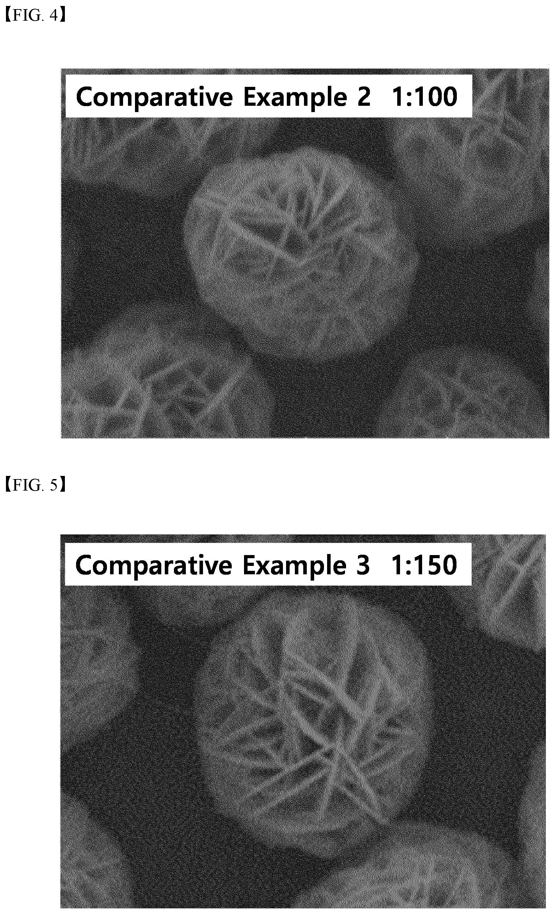

SEM (Scanning Electron Microscope) images of the positive electrode active materials manufactured according to the Examples and Comparative Examples were observed, and the results are shown in FIGS. 1 to 5 (Examples 1 to 2 and Comparative Examples 1 to 3, in order), respectively.

Referring to FIGS. 1 to 5, it was confirmed that the positive electrode active materials manufactured according to the Examples and Comparative Examples were secondary particles formed by aggregation of a plurality of primary particles, wherein the primary particles had a plate-shaped form and had different aspect ratios, which is a ratio of length to thickness.

### Experimental Example 2: Evaluation of Physical Properties of Positive Electrode Active Material

Various physical properties of the positive electrode active materials manufactured according to the Examples and Comparative Examples were evaluated, and the results are shown in Table 1 below. Specific experimental methods are as follows.

### (1) Evaluation of Average Aspect Ratio of Primary Particles

The average aspect ratio of the primary particles was measured by quantifying the SEM images through a segmentation imaging technique.

### (2) Evaluation of Average Thickness of Primary Particles

The average thickness of the primary particles was measured by quantifying the SEM images through a segmentation imaging technique.

### (3) Evaluation of Tap Density

Based on ASTM-B527, 15 g of the active material powder was placed in a 50 mL container, and then tapping was performed at 3,000 cycles at 284 cycles/min to measure the packing density.

### (4) Evaluation of BET Specific Surface Area

The specific surface area was measured using a BET method (Surface area and Porosity analyzer) (Micromeritics, ASAP2020).

**[Table 1]**

| | Average aspect ratio of primary particles | Average thickness of primary particles (nm) | Tap density (g/cc) | Specific surface area (m²/g) |
|---|---|---|---|---|
| Example 1 | 50 | 300 | 1.74 | 3.2 |
| Example 2 | 10 | 400 | 2.18 | 2.7 |
| Example 3 | 80 | 200 | 1.52 | 3.8 |
| Comparative Example 1 | 3 | 800 | 2.39 | 0.3 |
| Comparative Example 2 | 100 | 120 | 1.45 | 4.2 |
| Comparative Example 3 | 150 | 80 | 1.22 | 4.4 |

### Experimental Example 3: Evaluation of Battery Electrochemical Characteristics

The electrochemical characteristics of the lithium secondary batteries manufactured according to the Examples and Comparative Examples were evaluated, and the results are shown in Table 2 below. The specific experimental methods are as follows:

### (1) Evaluation of Initial Discharge Capacity and Initial Efficiency

After fabricating lithium secondary battery half-cells, the cells were aged at 25°C for 12 hours, and then charge/discharge tests were performed. For the evaluation of initial capacity, using 200 mAh/g as a reference capacity, the cells were charged to 4.25 V at a constant current of 0.1 C and then switched to a constant voltage mode, where charging continued until the cutoff current reached 0.05 C. After a 10-minute rest time following charging, discharge was performed at a constant current of 0.1 C, using 200 mAh/g as a reference capacity, until 2.5 V was reached.

### (2) Evaluation of Battery Energy Density

Secondary batteries were designed through a pouch-type battery design, and the energy density was evaluated by converting the average voltage, capacity, and battery volume, reflecting the density of electrodes using materials with each aspect ratio . Here, the electrode density was converted using the weight of the electrode per unit area and the thickness observed at maximum rolling.

### (3) Evaluation of High Output Characteristics (0.33 C / 0.1 C)

High output characteristics were evaluated by dividing the capacity at 0.33 C by the capacity at 0.1 C and converting the result into a percentage (%).

### (4) Evaluation of Overall Performance Index

The overall characteristics of the batteries were converted by assigning a 1:1 weight to the square of the battery energy density and the output characteristics. After setting the overall performance index of Example 2 to 100, relative values for other Examples and Comparative Examples were derived.

**[Table 2]**

| | Initial discharge capacity (mAh/g) | Initial efficiency (%) | Battery energy density (Wh/L) | High output characteristics (%) | Overall performance index |
|---|---|---|---|---|---|
| Example 1 | 279.7 | 91.9 | 602.1 | 93.7 | 100.0 |
| Example 2 | 277.5 | 92.3 | 603.6 | 93.2 | 100.0 |
| Example 3 | 280.2 | 91.8 | 600.4 | 94.3 | 100.1 |
| Comparative Example 1 | 265.4 | 92.4 | 607.3 | 91.0 | 97.8 |
| Comparative Example 2 | 274.8 | 89.7 | 583.3 | 95.3 | 95.5 |
| Comparative Example 3 | 280.2 | 90.3 | 573.4 | 97 | 93.9 |

Referring to Table 2, it can be confirmed that in the case of Examples 1 to 3, where the average aspect ratio of the primary particles, the tap density of the active material, and the specific surface area were appropriately controlled, both the battery energy density and the high output characteristics were satisfactorily improved, resulting in a very excellent overall performance index. In contrast, in the case of Comparative Example 1, where the average aspect ratio of the primary particles was too small, the tap density of the active material was too large, and the specific surface area was too small, the battery energy density was satisfactory, but the output characteristics deteriorated, leading to a decrease in the overall performance index.

In addition, in the case of Comparative Examples 2 and 3, where the average aspect ratio of the primary particles was too large, the tap density of the active material was too small, and the specific surface area was too large, the output characteristics were satisfactory, but the battery energy density deteriorated, resulting in a lower overall performance index.

In summary, the technical gist of the present invention is to satisfactorily improve both battery energy density and output characteristics by appropriately controlling the average aspect ratio of the primary particles and the like of the lithium- and manganese-excess lithium transition metal oxide.

Although the preferred embodiments of the present invention have been described above, the present invention is not limited thereto. Various modifications can be carried out within the scope of the patent claims, the detailed description of the invention, and the accompanying drawings, and it is natural that such modifications also fall within the scope of the present invention . Therefore, the substantial scope of the rights of the present invention shall be defined by the appended claims and their equivalents.

## Claims

1. A positive electrode active material for a lithium secondary battery, comprising: a layered lithium transition metal oxide containing an excess of lithium and manganese, wherein the positive electrode active material is a secondary particle formed by aggregation of a plurality of primary particles, the primary particles include plate-shaped particles, and an average aspect ratio of the primary particles is 5 to 90.

2. The positive electrode active material for a lithium secondary battery of claim 1, wherein in the lithium transition metal oxide, a molar ratio of lithium to transition metal (Li/Me) is greater than 1, and a molar ratio of manganese to transition metal (Mn/Me) is 0.55 or more.

3. The positive electrode active material for a lithium secondary battery of claim 2, wherein in the lithium transition metal oxide, the molar ratio of lithium to transition metal (Li/Me) is 1.985 or less.

4. The positive electrode active material for a lithium secondary battery of claim 1, wherein in the lithium transition metal oxide, a molar ratio of nickel to transition metal (Ni/Me) is 0.2 to 0.4.

5. The positive electrode active material for a lithium secondary battery of claim 1, wherein a tap density is 1.5 to 2.3 g/cc.

6. The positive electrode active material for a lithium secondary battery of claim 1, wherein a BET specific surface area is 0.5 to 4 m²/g.

7. The positive electrode active material for a lithium secondary battery of claim 1, wherein an average thickness of the primary particles is 500 nm or less.

8. The positive electrode active material for a lithium secondary battery of claim 1, wherein an average particle diameter (D₅₀) of the secondary particles is 3 to 15 µm.

9. The positive electrode active material for a lithium secondary battery of claim 1, wherein the lithium transition metal oxide is represented by Chemical Formula 1:
[Chemical Formula 1] Li₁₊ₐ(MnₓM_{y})₁₋ₐO₂
In Chemical Formula 1, 0 < a ≤ 0.33, 0.55 ≤ x < 1, 0 < y ≤ 0.45, x + y = 1, and M is Ni, Co, V, Cr, Fe, Ru, Ir, or a combination thereof.

10. A method for manufacturing a positive electrode active material for a lithium secondary battery, the method comprising: preparing a transition metal hydroxide containing manganese such that a molar ratio of manganese to transition metal (Mn/Me) is 0.55 or more; and forming a lithium transition metal oxide by forming a mixture comprising the transition metal hydroxide and a lithium raw material such that a molar ratio of lithium to transition metal (Li/Me) is 1.3 or more, followed by performing calcination, wherein the lithium transition metal oxide is a secondary particle formed by aggregation of a plurality of primary particles, the primary particles include plate-shaped particles, and an average aspect ratio of the primary particles is 5 to 90.

11. The method of claim 10, wherein the preparing of the transition metal hydroxide comprises: forming a transition metal-containing solution comprising a manganese raw material and other transition metal raw materials; introducing the transition metal-containing solution, a complexing agent-containing solution, and a pH adjuster-containing solution into a reactor to form an initial reaction solution; and performing a co-precipitation reaction of the initial reaction solution to form the transition metal hydroxide, wherein in the forming of the initial reaction solution, a concentration of the complexing agent in the complexing agent-containing solution is 0.4 to 1.6 mol%.

12. The method of claim 11, wherein in the forming of the initial reaction solution, a pH of the initial reaction solution is 9.6 to 11.

13. The method of claim 10, wherein in the forming of the lithium transition metal oxide, the calcination is performed at a temperature of 700 to 1000°C.

14. A lithium secondary battery comprising: a positive electrode; a negative electrode; a separator; and an electrolyte, wherein the positive electrode comprises the positive electrode active material of any one of claims 1 to 9.
